(19) Europäisches Patentamt
European Patent Office
Office européen des brevets

(11) EP 0 643 106 B1

(12) **EUROPEAN PATENT SPECIFICATION**

(45) Date of publication and mention
of the grant of the patent:
**22.12.1999 Bulletin 1999/51**

(51) Int Cl.6: **C08L 83/04**, C08K 5/54,
C09D 183/04, C08K 7/16

(21) Application number: **94306523.5**

(22) Date of filing: **05.09.1994**

(54) **Organopolysiloxane compositions, their preparation and use, rubber articles coated with them**

Organopolysiloxanzusammensetzung, Verfahren zu deren Herstellung, deren Anwendung und beschichtete Gegenstände

Compositions d'organopolysiloxanes, leur préparation et emploi et des objets en caoutchouc ayant un revêtement organopolysiloxane

(84) Designated Contracting States:
**DE FR GB**

(30) Priority: **10.09.1993 JP 25015993**

(43) Date of publication of application:
**15.03.1995 Bulletin 1995/11**

(73) Proprietor: **SHIN-ETSU CHEMICAL CO., LTD.
Chiyoda-ku Tokyo (JP)**

(72) Inventors:
• **Shiono, Mikio
Annaka-shi, Gunma-ken (JP)**
• **Okada, Kazumi
Takasaki-shi, Gunma-ken (JP)**
• **Fujiki, Hironao
Takasaki-shi, Gunma-ken (JP)**

(74) Representative: **Stoner, Gerard Patrick et al
MEWBURN ELLIS
York House
23 Kingsway
London WC2B 6HP (GB)**

(56) References cited:
**EP-A- 0 409 280        EP-A- 0 482 480
GB-A- 2 067 212        US-A- 4 252 933**

• **DATABASE WPI Derwent Publications Ltd.,
London, GB; AN 93-162220 & JP-A-05 093 135
(SHINETSU CHEM IND CO LTD.) , 16 April 1993**

Remarks:
The file contains technical information submitted after the application was filed and not included in this specification

## Description

This specification relates to organopolysiloxane compositions such as are used for imparting non-tackiness, water repellency, lubricity and wear resistance to rubber surfaces. In particular aspects it relates to organopolysiloxane compositions for use in surface treatment of rubber to form durably wear-resistant coatings thereon. It also relates to the preparation and use of such compositions, and to rubber articles having coatings formed from such compositions.

Prior Art

Inert silicone oil and various curable organopolysiloxane compositions have been used for imparting non-tackiness and water repellency to rubber surface.

The inert silicone oil has high initial wear properties, but does not last long since it is readily shed from the substrate surface by physical action as weak as water washing.

The curable organopolysiloxane compositions used heretofore are typically those containing a both end hydroxyl - blocked diorganopolysiloxane, a Si - H group - containing organopolysiloxane and/or an organoalkoxysilane, and an organic tin compound. These compositions form on the substrate surface coatings which are acceptably tack-free and water repellent, but poor in lubricity and wear resistance. It is possible to improve adhesiveness with a substrate, lubricity and wear resistance by adding a mixture or reaction product of an organopolysiloxane having an epoxy group such as glycidoxy group and epoxycyclohexyl group and alkoxysilane or siloxane having an amino group (Japan JP-B Nos. 54-43023, 56-19813 and 56-47864), but the improvement is not yet fully attained. It is also possible to improve lubricity and wear resistance by adding inert silicone to such organopolysiloxane compositions (Japan JP-B No. 4-80072), but the coatings are not satisfactorily durably wear resistant where frictional forces are repeatedly applied. There is a strong desire for improving coatings to be durably wear resistant.

EP-A-482480 describes organopolysiloxane compositions for surface coating on EPDM articles. The composition comprises

(A) an organopolysiloxane including epoxy-containing substituents, and optionally also terminal hydroxy groups, with a degree of polymerisation n from 10 to 5000;
(C) an organohydrogenpolysiloxane in order to condense with hydroxy groups of component (A);
(D) an alkoxysilane having alkoxy groups and also mercapto group bonded to silicon via a carbon atom;
(E) an alkoxysilane having alkoxy groups and an amino group bonded to silicon through at least one carbon atom, and
(F) a metal salt of a fatty acid as catalyst.

The possible addition of silicone resin powder is mentioned, but no details are given.

A general aim herein is to provide new and useful organopolysiloxane compositions curable to form coatings, particularly on rubber surfaces. Desirable coating characteristics are lack of tack, water repellency, lubricity and wear resistance, preferably in combination. Lasting wear resistance in particular is a preferred aim.

According to one aspect of the invention we provide an organopolysiloxane composition comprising

(A) 100 parts by weight of diorganopolysiloxane of the following general formula:

$$HOR_2^1SiO[R_2^1SiO]_mSiR_2^1OH \tag{1}$$

wherein groups $R^1$ are selected from monovalent hydrocarbon groups which may be unsubstituted or substituted with halogen, nitrile or hydroxyl, except that up to 1 mol% of groups $R^1$ may be hydroxyl, and m is at least 150;
(B) 5 to 80 parts by weight of diorganopolysiloxane of the following general formula:

$$R_3^2SiO[R_2^2SiO]_nSiR_3^2 \tag{2}$$

wherein groups $R^2$ are selected from monovalent hydrocarbon groups which may be unsubstituted or substituted with halogen, nitrile or hydroxyl, and n is equal to or greater than m;
(C) 1 to 30 parts by weight of organohydrogenpolysiloxane having per molecule at least three hydrogen atoms attached to silicon atom;
(D) 1 to 20 parts by weight of organosilane containing per molecule at least two alkoxy groups attached to silicon atom, and a mercapto group attached to silicon atom through an alkylene group;

partial hydrolysate of such organosilane in which at least two alkoxy groups survive, or
a mixture of such organosilane and partial hydrolysate;

(E) 5 to 100 parts by weight of organosilane containing per molecule at least two alkoxy groups attached to silicon atom and a substituted or unsubstituted amino group attached to silicon atom through an alkylene group;

partial hydrolysate of such organosilane in which at least two alkoxy groups survive, or
a mixture of such organosilane and partial hydrolysate;

(F) 0.5 to 15 parts by weight of metal salt of fatty acid, and
(G) 2 to 40 parts by weight of fine powder selected from thermoplastic resins and the metal oxides silica, zirconia and alumina, and having a mean particle size not more than 50μm.

We have found that a cured organopolysiloxane coating of such compositions is obtainable with good non-tackiness, water repellency and lubricity, and also wear resistance durability.

Another proposal herein is an article, typically a rubber article, having a cured coating formed from a composition as proposed herein.

Another proposal is a method comprising forming such a curable organopolysiloxane composition by mixing the ingredients disclosed herein.

DETAILED DESCRIPTIONS; PREFERRED AND OPTIONAL FEATURES

An organopolysiloxane composition has, and may be substantially constituted by, components (A) to (G).

Component (A) is a both end hydroxyl-blocked diorganopolysiloxane of the formula (1). It is a main component to form a coating, with its hydroxyl groups reacting with a Si-H group of component (C) and alkoxy groups of components (D) and (E) for curing.

$$HOR_2^1SiO[R_2^1SiO]_mSiR_2^1OH \qquad (1)$$

In formula (1), groups $R^1$ are monovalent substituted or unsubstituted hydrocarbon groups. It is preferably selected from hydrocarbon groups having 1 to 8 carbon atoms, more preferably 1 to 6 carbon atoms, for example, alkyl groups such as methyl, ethyl, propyl, isopropyl, butyl, iso-butyl, ter-butyl, pentyl, neo-pentyl, hexyl and cyclohexyl, alkenyl groups such as vinyl, allyl, propenyl, isopropenyl, butenyl, iso-butenyl and cyclohexenyl, aryl groups such as phenyl, tolyl, xylyl and naphthyl, aralkyl groups such as styrenyl, benzyl, phenylethyl and phenylpropyl and substituted hydrocarbon groups in which one or more hydrogen atoms of these hydrocarbon groups are replaced by halogen atoms including fluorine atoms and chlorine atoms, or by nitrile groups. Examples are chloromethyl, chloropropyl, bromoethyl, trifluoropropyl and cyanoethyl. These groups are in themselves conventional and the skilled person will be able to apply conventional knowledge to the selection thereof. Part (usually 1 mol% or less) of $R^1$ may be or have hydroxyl group if particularly desired for imparting certain properties. A substituted or unsubstituted alkyl group, particularly a methyl group is preferred among these groups because of ease of synthesis, ease of handling, and an ability to impart adequate curability to the composition. Letter m which represents a degree of polymerization is an integer of at least 150, preferably from 150 to 10,000, more preferably from 200 to 10,000. If m is less than 150, the cured coating becomes brittle and would not follow deformation of the substrate. If m is too large, the composition before curing would have an increased viscosity to render handling less efficient. Two or more diorganopolysiloxanes may be used in combination if m is within the above-defined range and if desired.

Component (B) is a diorganopolysiloxane of the following general formula (2). The diorganopolysiloxane (B) does not contain a hydroxyl group attached to a silicon atom in a molecule and is effective for imparting lubricity and satisfactory wear resistance to a cured coating.

$$R_3^2SiO[R_2^2SiO]_nSiR_3^2 \qquad (2)$$

In formula (2), $R^2$ are monovalent substituted or unsubstituted hydrocarbon groups preferably having 1 to 8, preferably 1 to 6 carbon atoms, examples of which are the same as described for $R^1$. Again, a substituted or unsubstituted alkyl group, particularly a methyl group,is a preferred $R^2$ group because of ease of synthesis. Letter n is an integer equal to or greater than m, and preferably in the range of 150 to 12,000, more preferably 200 to 10,000. Some of the above-mentioned advantages would be lost if n is smaller than m.

Component (B) is blended in amounts of 5 to 80 parts, more preferably 5 to 60 parts by weight per 100 parts by weight of component (A). With less than 5 parts of component (B) on this basis, the cured coating may be poor in lubricity and wear resistance. More than 80 parts of component (B) may reduce the mechanical strength of a cured coating and rather adversely affect wear resistance.

Component (C) is an organohydrogenpolysiloxane having at least three hydrogen atoms, preferably from 3 to 100, more preferably from 3 to 50, each attached to a silicon atom, in a molecule. It acts as a crosslinking agent by reacting with a hydroxyl group attached to a silicon atom in component (A) in the presence of a metal fatty acid salt as component (F) to thereby form a three-dimensional network structure. The molecular structure of component (C) is not critical and may be any of straight, branched, cyclic and three-dimensional structures.

The organohydrogenpolysiloxane may have the following compositional formula:

$$R^3_a H_b SiO_{\frac{4-(a+b)}{2}}$$

wherein $0.5 < a < 2$, $0.02 \leq b \leq 1$, and $0.7 < a + b < 3$. The organohydrogenpolysiloxane may have 4 to 150 silicon atoms, preferably 4 to 100 silicon atoms in a molecule.

The organic group attached to a silicon atom in a molecule expressed by $R^3$ in the above general compositional formula is a monovalent substituted or unsubstituted hydrocarbon group having 1 to 8 carbon atoms exemplified by the same groups as those in $R^1$, and include alkyl groups such as methyl, ethyl, propyl, butyl and hexyl, alkenyl groups such as vinyl and allyl, aryl groups such as phenyl, aralkyl groups such as styrenyl, and substituted hydrocarbon groups in which some hydrogen atoms of these hydrocarbon groups are replaced by halogen e.g. fluorine atoms or chlorine atoms, or by nitrile groups. Some organic groups may be hydroxyl groups. A substituted or unsubstituted alkyl group, particularly a methyl group is especially preferred because of ease of synthesis.

Component (C) is blended in amounts of 1 to 30 parts, more preferably 2 to 25 parts by weight per 100 parts by weight of component (A). On this basis, less than 1 part of component (C) usually promotes curing to a lesser extent, failing to provide a necessary film strength. If the amount of component (C) exceeds 30 parts, there would usually be residual excess Si-H bonds which can cause a change of physical properties with time.

Component (D) is an organosilane containing at least two alkoxy groups, preferably 2 to 3 alkoxy groups, each attached to a silicon atom, and and a mercapto group attached to a silicon atom through an alkylene group in a molecule, a partial hydrolysate thereof, or a mixture of such an organosilane and a partial hydrolysate thereof. It is effective for providing good adherence to the rubber substrate when used in combination with component (E).

It should be noted that the "partial hydrolysate"in component (D) and component (E) explained later means that the condensate obtained by partially hydrolysing the silane, is such that at least two, preferably at least three of alkoxy groups survive therein.

The alkoxy group preferably has 1 to 8 carbon atoms, more preferably 1 to 6 carbon atoms. Examples of the alkoxy group include methoxy, ethoxy, propoxy, isopropoxy, butoxy, isobutoxy, ter-butoxy, methoxyethoxy, and ethoxyethoxy groups, with the methoxy and ethoxy groups being preferred for ease of synthesis. The alkylene group preferably has 1 to 8 carbon atoms, more preferably 1 to 6 carbon atoms. Examples of the alkylene group include methylene, ethylene, propylene, and tetramethylene, hexamethylene, methylethylene groups, with the propylene group being preferred for storage stability and ease of synthesis.

The organosilane may have organic groups attached to silicon atom other than the alkoxy group and the mercapto-alkylene group. Examples of such organic groups include substituted or unsubstituted monovalent hydrocarbon group having 1 to 8 carbon atoms as exemplified by $R^1$, preferably an alkyl group such as a methyl group.

Exemplary organosilanes as component (D) are γ-mercaptopropyltrimethoxysilane, γ-mercaptopropylmethyldimethoxysilane, mercaptopropylmethyldimethoxysilane, and and partially hydrolysed products thereof. Among these, γ-mercaptopropyltrimethoxysilane and a partial hydrolysate thereof are preferred.

Component (D) is blended in amounts of 1 to 20 parts, more preferably 2 to 15 parts by weight per 100 parts by weight of component (A). On this basis, less than 1 part of component (D) tends to give less adhesion. More than 20 parts of component (D) would usually provide no further advantages and the cured coating would sometimes be reduced in mechanical properties.

Component (E) is an organosilane containing at least two alkoxy groups, preferably 2 to 3 alkoxy groups, each attached to a silicon atom and a substituted or unsubstituted amino group attached to a silicon atom through an alkylene group in a molecule, a partial hydrolysate thereof, or a mixture of such an organosilane and a partial hydrolysate thereof. It is effective not only for providing good adherence to the rubber substrate when used in combination with

4

component (D), but also for imparting lubricity to the cured coating.

Examples of the alkoxy group include the same alkoxy groups described for component (D) such as methoxy, ethoxy, propoxy and butoxy groups, with the methoxy and ethoxy groups being preferred for ease of synthesis. Examples of the alkylene group include the same alkylene groups as described for component (D), preferably a propylene group. Examples of the substituted or unsubstituted amino group include amino group, an alkyl - substituted amino group such as methylamino and ethylamino groups, an amino-substituted amino group such as β-aminoethyl-amino group, and an aralkyl-substituted amino group such as benzylamino group. Examples of the substituted or unsubstituted amino group attached to a silicon atom through an alkylene group include aminomethyl, β-aminoethyl, γ-aminopropyl, δ-aminobutyl, γ-(methylamino)propyl, γ-(ethylamino)propyl, γ-(β-aminoethylamino)propyl, and γ-(benzylamino)propyl groups. The alkylene group is preferably a propylene group as in the γ-aminopropyl group when stability during storage is taken into account.

The organosilane may have organic groups attached to a silicon atom other than the alkoxy group and the substituted or unsubstituted aminoalkylene group. Examples of such organic group include substituted or unsubstituted monovalent hydrocarbon groups having 1 to 8 carbon atoms as exemplified by $R^1$, preferably an alkyl group such as a methyl group.

Exemplary organosilanes as component (E) are γ-aminopropyltrimethoxysilane, γ-aminopropyltriethoxysilane, N-β-(aminoethyl)-γ-aminopropyltrimethoxysilane, N-benzyl-γ-aminopropyltrimethoxysilane and partially hydrolysed products thereof. Among these, γ-aminopropyltriethoxysilane and a partial hydrolysate thereof are preferred.

Component (E) is blended in amounts of 5 to 100 parts, more preferably 10 to 80 parts by weight per 100 parts by weight of component (A). On this basis, less than 5 parts of component (E) is usually too little to contribute to adhesion and lubricity. More than 100 parts of component (E) may hinder curing and reduce the mechanical properties of a cured coating.

Component (F) is a metal (e.g. Sn, Zn, Fe) salt of a fatty acid which is a catalyst for promoting dehydrogenation condensation reaction between a hydroxyl group in the both end hydroxyl-blocked diorganopolysiloxane as component (A) and a Si-H bond in the organohydrogenpolysiloxane as component (C). Examples include those having an organic group directly attached to a metal, such as dibutyltin diacetate, dibutyltin dioctoate, dibutyltin dilaurate, dibutyltin dioleate, dibutyltin distearate, tributyltin acetate, tributyltin octoate, tributyltin laurate, dioctyltin diacetate, dioctyltin dilaurate, diethyltin dioleate, and monomethyltin dioleate and those free of an organic group directly attached to a metal, such as zinc octanoate, iron octanoate, and tin octanoate.

Component (F) or fatty acid metal salt is blended in amounts of 0.5 to 15 parts, more preferably 0.6 to 10 parts by weight calculated as metal per 100 parts by weight of the total of components (A), (B) and (C). On this basis, less than 0.5 part of component (F) may give insufficient catalysis, resulting in short curing. More than 15 parts of component (F) may promote reaction too fast so that no appropriate pot life is available.

Component (G) is fine powder having a mean particle size of up to 50 μm. The powder is effective for eliminating lustre from a cured coating of the composition, reducing the tackiness of a coating and improving the wear resistance of the cured coating. The powder is selected from finely divided thermoplastic resins such as polycarbonate, nylon, polyethylene, Teflon®, polymethylsilsesquioxane, and polyacetal and finely divided inorganic materials, for example, metal oxides such as silica, zirconia and alumina. Polycarbonate is preferred among others.

The fine powder should have a mean particle size of up to 50 μm, preferably 0.3 to 50 μm, more preferably 1 to 30 μm. A powder with a mean particle size of more than 50 μm may reduce the mechanical strength and wear resistance of a cured coating. Particles with a mean particle size of less than 0.3 μm are sometimes difficult to manufacture and would provide no further advantages. The fine particles are preferably spherical or flake in shape although polygonal particles, odd shaped particles or fragments are acceptable. The particles are preferably colored black in outer appearance, to help the coating to hide any discoloration of the underlying substrate.

Component (G) is blended in amounts of 2 to 40 parts, more preferably 5 to 30 parts by weight per 100 parts by weight of the total of components (A), (B) and (C). On this basis, less than 2 parts of component (G) is usually too little to provide the desired effect whereas more than 40 parts may cause some deterioration of mechanical strength and a substantial loss of wear resistance of a cured coating.

In general, fine powder as component (G) contributes to improvements in matte and wear resistance when added to various curable coatings, for example, of urethane and silicone resin. However, fine powder has the drawback that when added to a coating composition, the fine powder itself has no adherence to the matrix resin and can be separated from the matrix resin when subject to repetitive frictional forces. The combined use of components (D) and (E) helps improve the adherence of fine powder to the matrix resin, thereby imparting long-lasting wear resistance to a cured coating.

Any desired one or more additives and fillers may be added to the composition insofar as its overall effectiveness is not impaired. These may be conventional and the skilled reader may apply conventional discretion. For example, there may be blended reinforcing fillers such as fumed silica and precipitated silica, which may be treated to be hydrophobic, and non-reinforcing fillers such as silica aerogel, ground quartz, and diatomaceous earth. Various silicone resins and organic resins may also be used as reinforcing filler. These fillers may be used alone or in admixture of two or more. Silicone resins usable herein include silicone resins consisting essentially of a $R_3SiO_{1/2}$ unit and a $SiO_2$ unit and/or $RSiO_{3/2}$ unit, and silicone resins consisting of a $RSiO_{3/2}$ unit, with compounds having a $\equiv SiOH$ or $\equiv SiOR$ group in a molecule being preferred. R represents a substituted or unsubstituted monovalent hydrocarbon group preferably having 1 to 8 carbon groups as exemplified by $R^1$, particularly methyl, vinyl, phenyl and trifluoropropyl groups.

Also, inorganic pigments such as carbon black and iron oxide and UV absorbers such as carbon black and benzotriazole may be added to the composition.

Further, for adjusting the physical properties of a cured coating resulting from the use of the composition, various silanes such as organo alkoxysilanes or partial hydrolysates thereof may be added to the composition. Exemplary silanes are trimethoxysilane, vinyltrimethoxysilane, triethoxysilane, vinyltriethoxysilane, tetramethoxysilane, tetraethoxysilane, and tetra(n-propoxy)silane. Silane coupling agents such as 7-glycidoxypropyltrimethoxysilane and γ-methacryloxypropyltrimethoxysilane or partial hydrolyzates thereof may also be added for improving adhesion to the substrate. Also useful are a reaction product (i.e. an reaction product of amino group with epoxy group) of an amino group-containing organo alkoxysilane selected from the group consisting of γ-aminopropyltrimethoxysilane, γ-aminopropyltriethoxysilane, N-β-(aminoethyl)-γ-aminopropyltrimethoxysilane, and N-benzyl-γ-aminopropyltrimethoxysilane with an epoxy group-containing organo alkoxysilane such as 7-glycidoxypropyltrimethoxysilane or a partial hydrolyzate thereof, and a reaction product (i.e. an reaction product of amino group with (meth)acryloxy group) of an amino group-containing organo alkoxy silane selected from the group consisting of γ-aminopropyltrimethoxysilane, γ-aminopropyltriethoxysilane, and N-benzyl-γ-aminopropyltrimethoxysilane with an acryloxy group or methacryloxy group-containing organo alkoxysilane such as γ-acryloxypropyltrimethoxysilane, γ-methacryloxypropyltrimethoxysilane or a partial hydrolysatethereof. These adhesion promoters may be used alone or in admixture of two or more.

In treating rubber substrates with compositions as disclosed herein, the composition may be used as such or in dilution with organic solvents. The organic solvents usable for thisinclude n-hexane, n-heptane, cyclo-hexane, industrial gasoline, petroleum naphtha, iso-paraffin, benzene, toluene, xylene, isopropyl alcohol, butyl alcohol, cyclohexanone, methyl ethyl ketone, and mixtures thereof. Preferred among others are industrial gasoline, petroleum naphtha, and iso-paraffin and mixtures of one or more of them with isopropyl alcohol. The amount of organic solvent used is suitably selected in accordance with the viscosity desired for the composition on application.

The composition may be readily prepared by uniformly mixing the above-mentioned components. In a preferred practice, a mixture of components (A), (B), (C), (D), and (G), component (E), and component (F) are stored separately and these three are admixed on use. The former mixture is an independent proposal herein.

Various rubber substrates may be treated with the compositions disclosed herein, e.g. by the following methods. The composition can be applied to a surface of the substrate by dipping, spraying, brushing, knife coating, or roll coating. As previously mentioned, the composition may be used as such or after it is diluted with an organic solvent into a solution. The coating may be cured by allowing it to stand at room temperature or by some heating, for example, heating at a temperature of 60 to 200°C for 30 seconds to 30 minutes.

When various rubber substrates are treated with the composition, the composition produces a cured coating having satisfactory non-tackiness to another substance, water repellency, lubricity and wear resistance. The rubber substrate is typically synthetic rubber, such as EPDM (ethylene-propylene copolymer) and it may be coated with the composition by any conventional technique such as spray coating.

We find that we can obtain cured coatings having improved wear resistance as compared with conventional organopolysiloxane compositions. They aresuitable for use in applications where repetitive frictional forces are applied for a long term, for example, as a surface treating agent for automotive weather strips and vibration damping rubber.

There has been described an organopolysiloxane composition which can impart non-tackiness, water repellency, lubricity and wear resistance to rubber surface. It is particularly suitable for surface treatment to form a durably wear resistant coating on rubber surface.

## EXAMPLE

Examples of the invention are given below by way of illustration and not by way of limitation. All parts are by weight.

## Examples 1 and 2

To 1,000 parts of industrial gasoline No. 2 were added and dissolved 100 parts of a both end hydroxyl-blocked dimethylpolysiloxane of the following average formula (a) and 15 parts of a dimethylpolysiloxane of the following average formula (b).

$$HO(CH_3)_2SiO[(CH_3)_2SiO]_{5998}Si(CH_3)_2OH \qquad (a)$$

$$(CH_3)_3SiO[(CH_3)_2SiO]_{5998}Si(CH_3)_3 \qquad (b)$$

To this solution were added 5 parts of a methylhydrogenpolysiloxane of the following average formula (c) and 20 parts of spherical particles of polycarbonate resin having a mean particle size of 20 µm.

$$(CH_3)_3Si[(CH_3)HSiO]_{48}Si(CH_3)_3 \qquad (c)$$

The mixture was agitated and mixed. To this powder dispersion were added 5 parts of γ-mercaptopropyltrimethoxysilane and 35 parts of γ-aminopropyltriethoxysilane. The mixture was agitated and mixed again. Finally, 20 parts of a 50 wt% toluene solution of dibutyltin diacetate was added and mixed, obtaining an industrial gasoline solution of a treating composition (Example 1).

The same procedure as Example 1 was repeated except that the amount of the both end hydroxyl - blocked dimethylpolysiloxane was changed from 100 parts to 70 parts and 30 parts of a both end hydroxyl-blocked dimethylpolysiloxane of the following average formula (d) was used, obtaining an industrial gasoline solution of a treating composition (Example 2).

$$HO(CH_3)_2SiO[(CH_3)_2SiO]_{448}Si(CH_3)_2OH \qquad (d)$$

Next, each of the treating solutions prepared in Examples 1 and 2 was spray coated to a surface of EPDM sponge. The coatings were dried for 5 minutes and heated at 150°C for 2 minutes to form hard cured coatings of 5 µm thick. The coatings were tack-free and smooth to slide on. The coatings were subject to an abrasion test (slide abrasion test) under the following conditions.

Test conditions

| | |
|---|---|
| Test machine : | reciprocating abrasion tester |
| Abrasion element : | glass plate of 5 mm thick |
| Load : | 200 g |
| Stroke : | 100 mm |
| Abrasion cycle : | 30 cycles/min. |

The results are shown in Table 1.

Comparative Examples 1 and 2

A treating solution was prepared by the same procedure as in Example 1 except that the polycarbonate powder was omitted. It was similarly applied to EPDM sponge by coating and heat curing, to form a cured film on the EPDM surface. The coating was subject to the same abrasion test as in Example 1. (Comparative Example 1)

A treating solution was prepared as in Comparative Example 1 except that 15 parts of the dimethylpolysiloxane of formula ( b) was replaced by 15 parts of a dimethylpolysiloxane of the following average formula (e).

$$(CH_3)_3SiO[(CH_3)_2SiO]_{1498}Si(CH_3)_3 \qquad (e)$$

It was similarly applied to EPDM sponge by coating and heat curing, to form a cured film on the EPDM surface. The coating was subject to the same abrasion test as in Example 1.

(Comparative Example 2)

The results are shown in Table 1.

Comparative Examples 3 and 4

A treating solution was prepared by the same procedure as in Example 2 except that the polycarbonate powder was omitted. It was similarly applied to EPDM sponge by coating and heat curing, to form a cured film on the EPDM surface. The coating was subject to the same abrasion test as in Example 1. (Comparative Example 3)

A treating solution was prepared as in Comparative Example 3 except that 15 parts of the dimethylpolysiloxane of formula (b) was replaced by 15 parts of the dimethylpolysiloxane of formula (e). It was similarly applied to EPDM sponge by coating and heat curing, to form a cured film on the EPDM surface. The coating was subject to the same abrasion test as in Example 1. (Comparative Example 4)

Comparative Examples 5 - 6

A treating solution was prepared by the same procedure as in Example 1 except that 15 parts of the dimethylpolysiloxane (b) was replaced by 15 parts of the dimethylpolysiloxane (e) (Comparative Example 5).

A treating solution was prepared by the same procedure as in Example 2 except that 15 parts of the dimethylpolysiloxane (b) was replaced by 15 parts of dimethylpolysiloxane (e). (Comparative Example 6)

The results are shown in Table 1.

Table 1

| Abrasion Test | Cycles | Evaluation |
|---|---|---|
| Example 1 | 55,000 | OK |
| Comparative Example 1 | 30,000 | NG |
| Comparative Example 2 | 20,000 | NG |
| Example 2 | 60,000 | OK |
| Comparative Example 3 | 35,000 | NG |
| Comparative Example 4 | 20,000 | NG |
| Comparative Example 5 | 40,000 | NG |
| Comparative Example 6 | 45,000 | NG |

The coating was evaluated for abrasion by inspecting it on every 5,000 cycles. The number of cycles means that the cured coating was resistant against abrasion until the indicated number of cycles. For example, 55,000 cycles means that the coating was abraded away between 55,000 and 60,000 cycles.

Japanese Patent Application No. 5-250159 is incorporated herein by reference.

Although some preferred embodiments have been described, many modifications and variations may be made thereto in the light of the above teachings. It is therefore to be understood that within the scope of the appended claims, the invention may be practiced otherwise than as specifically described.

**Claims**

1. An organopolysiloxane composition comprising

    (A) 100 parts by weight of diorganopolysiloxane of the following general formula:

$$HOR_2^1SiO[R_2^1SiO]_m SiR_2^1OH \tag{1}$$

    wherein groups $R^1$ are selected from monovalent hydrocarbon groups which may be unsubstituted or substituted with halogen, nitrile or hydroxyl, except that up to 1 mol% of groups $R^1$ may be hydroxyl, and m is at least 150;

(B) 5 to 80 parts by weight of diorganopolysiloxane of the following general formula:

$$R_3^2SiO[R_2^2SiO]_n SiR_3^2 \qquad (2)$$

wherein groups $R^2$ are selected from monovalent hydrocarbon groups which may be unsubstituted or substituted with halogen, nitrile or hydroxyl, and n is equal to or greater than m;

(C) 1 to 30 parts by weight of organohydrogenpolysiloxane having per molecule at least three hydrogen atoms attached to silicon atom;

(D) 1 to 20 parts by weight of organosilane containing per molecule at least two alkoxy groups attached to silicon atom, and a mercapto group attached to silicon atom through an alkylene group;

partial hydrolysate of such organosilane in which at least two alkoxy groups survive, or
a mixture of such organosilane and partial hydrolysate;

(E) 5 to 100 parts by weight of organosilane containing per molecule at least two alkoxy groups attached to silicon atom and a substituted or unsubstituted amino group attached to silicon atom through an alkylene group;

partial hydrolysate of such organosilane in which at least two alkoxy groups survive, or
a mixture of such organosilane and partial hydrolysate;

(F) 0.5 to 15 parts by weight of metal salt of fatty acid, and

(G) 2 to 40 parts by weight of fine powder selected from thermoplastic resins and the metal oxides silica, zirconia and alumina, and having a mean particle size not more than 50µm.

2. A composition according to claim 1 in which m, the degree of polymerisation in component (A), is in the range 200 to 10000.

3. A composition according to claim 1 or claim 2 in which n, the degree of polymerisation of component (B), is in the range 200 to 10000.

4. A composition according to any one of the preceding claims in which for component (D) the organosilane is selected from γ-mercapto-propyltrimethoxy-silane, γ-mercapto-propyl-methyl-dimethoxysilane, and γ-mercapto-propyl-triethoxy-silane.

5. A composition according to any one of the preceding claims in which for component (E) the organosilane is selected from γ-amino-propyltrimethoxy-silane, γ-amino-propyl-triethoxy-silane, N-β-(aminoethyl)-γ-amino-propyl-trimethoxy-silane and N-benzyl-γ-amino-propyl-trimethoxy-silane.

6. A composition according to any one of the preceding claims in which component (F) is selected from dibutyltin diacetate, dibutyltin dioctoate, dibutyltin dilaurate, dibutyltin dioleate, dibutyltin distearate, tributyltin acetate, tributyltin octoate, tributyltin laurate, dioctyltin diacetate, dioctyltin dilaurate, diethyltin dioleate, monomethyltin dioleate, zinc octanoate, iron octanoate, and tin octanoate.

7. A composition according to any one of the preceding claims in which the fine powder (G) is selected from polycarbonate, nylon, polyethylene, polytetrafluorethylene, polymethylsilsesquioxane and polyacetal.

8. A composition according to any one of the preceding claims in which the fine powder (G) has a mean particle size in the range 1 to 30µm.

9. A mixture of the components (A), (B), (C), (D) and (G) as defined in any one of claims 1 to 4, 7 and 8 above, for use by mixing with the further components (E) and (F).

10. A method of preparing a composition according to any one of claims 1 to 9, comprising mixing together the mentioned components thereof.

EP 0 643 106 B1

11. A method of coating a rubber article comprising applying a composition as defined in any one of claims 1 to 8 to the article and curing the composition.

12. A rubber article having a coating made by curing a layer of a composition as defined in any one of claims 1 to 8.

**Patentansprüche**

1. Organopolysiloxan-Zusammensetzung, umfassend:

    (A) 100 Gewichtsteile Diorganopolysiloxan der folgenden allgemeinen Formel:

    $$HOR_2^1SiO[R_2^1SiO]_mSiR_2^1OH \qquad (1)$$

    worin die Gruppen $R^1$ aus einwertigen Kohlenwasserstoffgruppen ausgewählt sind, die unsubstituiert oder mit Halogen, Nitril oder Hydroxyl substituiert sein können, mit der Ausnahme, daß bis zu 1 Mol-% der Gruppen $R^1$ Hydroxyl sein können, und m zumindest 150 ist;
    (B) 5 bis 80 Gewichtsteile Diorganopolysiloxan der folgenden allgemeinen Formel:

    $$R_3^2SiO[R_2^2SiO]_nSiR_3^2 \qquad (2)$$

    worin die Gruppen $R^2$ aus einwertigen Kohlenwasserstoffgruppen ausgewählt sind, die unsubstituiert oder mit Halogen, Nitril oder Hydroxyl substituiert sein können, und gilt: $n \geq m$;
    (C) 1 bis 30 Gewichtsteile Organohydrogenpolysiloxan, das pro Molekül zumindest drei an Siliziumatom gebundene Wasserstoffatome aufweist;
    (D) 1 bis 20 Gewichtsteile Organosilan, das pro Molekül zumindest zwei an Siliziumatom gebundene Alkoxygruppen und eine Mercaptogruppe, die über eine Alkylengruppe an Siliziumatom gebunden ist, enthält;

    partielles Hydrolysat eines solchen Organosilans, bei dem zumindest zwei Alkoxygruppen zurückbleiben, oder
    ein Gemisch aus solchem Organosilan und partiellem Hydrolysat;

    (E) 5 bis 100 Gewichtsteile Organosilan, das pro Molekül zumindest zwei an Siliziumatom gebundene Alkoxygruppen und eine substituierte oder unsubstituierte Aminogruppe, die über eine Alkylengruppe an Siliziumatom gebunden ist, enthält;

    partielles Hydrolysat eine solchen Organosilans, bei dem zumindest zwei Alkoxygruppen zurückbleiben, oder
    ein Gemisch aus solchem Organosilan und partiellem Hydrolysat;

    (F) 0,5 bis 15 Gewichtsteile Fettsäure-Metallsalz, sowie
    (G) 2 bis 40 Gewichtsteile feines Pulver, das aus thermoplastischen Harzen und den Metalloxiden Siliziumdioxid, Zirkoniumdioxid und Aluminiumoxid ausgewählt ist und eine mittlere Teilchengröße von nicht über 50 µm aufweist.

2. Zusammensetzung nach Anspruch 1, in der m, der Polymerisationsgrad in Komponente (A), im Bereich von 200 bis 10.000 liegt.

3. Zusammensetzung nach Anspruch 1 oder 2, in der n, der Polymerisationsgrad von Komponente (B), im Bereich von 200 bis 10.000 liegt.

4. Zusammensetzung nach einem der vorangegangenen Ansprüche, bei der für Komponente (D) das Organosilan aus γ-Mercaptopropyltrimethoxysilan, γ-Mercaptopropylmethyldimethoxysilan und γ-Mercaptopropyltriethoxysilan ausgewählt ist.

10

**5.** Zusammensetzung nach einem der vorangegangenen Ansprüche, bei der für Komponente (E) das Organosilan aus γ-Aminopropyltrimethoxysilan, γ-Aminopropyltriethoxysilan, N-β-(Aminoethyl)-γ-aminopropyltrimethoxysilan und N-Benzyl-γ-aminopropyltrimethoxysilan ausgewählt ist.

**6.** Zusammensetzung nach einem der vorangegangenen Ansprüche, bei der Komponente (F) aus Dibutylzinndiacetat, Dibutylzinndioctoat, Dibutylzinndilaurat, Dibutylzinndioleat, Dibutylzinndistearat, Tributylzinnacetat, Tributylzinnoctoat, Tributylzinnlaurat, Dioctylzinndiacetat, Dioctylzinndilaurat, Diethylzinndioleat, Monomethylzinndioleat, Zinkoctanat, Eisenoctanat und Zinnoctanat ausgewählt ist.

**7.** Zusammensetzung nach einem der vorangegangenen Ansprüche, bei der das feine Pulver (G) aus Polycarbonat, Nylon, Polyethylen, Polytetrafluorethylen, Polymethylsilsesquioxan und Polyacetal ausgewählt ist.

**8.** Zusammensetzung nach einem der vorangegangenen Ansprüche, bei der das feine Pulver (G) eine mittlere Teilchengröße im Bereich von 1 bis 30 μm aufweist.

**9.** Gemisch aus den Komponenten (A), (B), (C), (D) und (G), wie nach einem der obigen Ansprüche 1 bis 4, 7 und 8 definiert, zur Verwendung durch Vermischen mit den weiteren Komponenten (E) und (F).

**10.** Verfahren zur Herstellung einer Zusammensetzung nach einem der Ansprüche 1 bis 9, umfassend das Vermischen ihrer obengenannten Komponenten.

**11.** Verfahren zum Beschichten eines Gummigegenstands, umfassend das Aufbringen einer Zusammensetzung nach einem der Ansprüche 1 bis 8 auf den Gegenstand und das Härten der Zusammensetzung.

**12.** Gummigegenstand mit einem Überzug, der durch Harten einer Schicht aus einer Zusammensetzung nach einem der Ansprüche 1 bis 8 hergestellt ist.

**Revendications**

**1.** Composition d'organopolysiloxane comprenant

(A) 100 parties en poids d'un diorganopolysiloxane de la formule générale suivante :

$$HOR_2^1SiO[R_2^1SiO]_mSiR_2^1OH \qquad (1)$$

où les groupes R$^1$ sont sélectionnés parmi des groupes hydrocarbures monovalents qui peuvent être non substitués ou substitués par un halogène, un nitrile, un hydroxyle, sauf que jusqu'à 1 % en moles des groupes R$^1$ peut être un hydroxyle, et m vaut au moins 150 ;
(B) 5 à 80 parties en poids d'un diorganopolysiloxane de la formule générale suivante :

$$R_3^2SiO[R_2^2SiO]_nSiR_3^2 \qquad (2)$$

où les groupes R$^2$ sont sélectionnés parmi des groupes hydrocarbures monovalents qui peuvent etre non substitués ou substitués par un halogène, un nitrile ou un hydroxyle, et n est égal à ou supérieur à m ;
(C) 1 à 30 parties en poids d'un organohydrogénopolysiloxane ayant par molécule au moins trois atomes d'hydrogène attachés à l'atome de silicium ;
(D) 1 à 20 parties en poids d'un organosilane contenant par molécule au moins deux groupes alcoxy attachés à un atome de silicium, et un groupe mercapto attaché à un atome de silicium par un groupe alkylène ;

un hydrolysat partiel d'un tel organosilane dans lequel au moins deux groupes alcoxy survivent, ou un mélange d'un tel organosilane et d'un tel hydrolysat partiel ;

(E) 5 à 100 parties en poids d'un organosilane contenant par molécule au moins deux groupes alcoxy attachés à un atome de silicium et un groupe amino substitué ou non substitué attaché à un atome de silicium par un groupe alkylène ;

un hydrolysat partiel d'un tel organosilane dans lequel au moins deux groupes alcoxy survivent, ou un mélange d'un tel organosilane et d'un tel hydrolysat partiel ;

(F) 0,5 à 15 parties en poids d'un sel métallique d'un acide gras, et
(G) 2 a 40 parties en poids d'une poudre fine sélectionnée parmi des résines thermoplastiques et les oxydes métalliques, silice, zircone et alumine, et ayant une taille moyenne de particules non supérieure à de 50 μm.

2. Composition selon la revendication 1, dans laquelle m, le degré de polymérisation dans le composant (A), est dans l'intervalle de 200 à 10 000.

3. Composition selon la revendication 1 ou 2 dans laquelle n, le degré de polymérisation du composant (B), est dans l'intervalle de 200 à 1 000.

4. Composition selon l'une quelconque des revendications précédentes dans laquelle pour le composant (D) l'organosilane est sélectionné parmi le γ-mercapto-propyl triméthoxy silane, le γ-mercaptopropylméthyldiméthoxysilane, et le γ-mercaptopropyltriéthoxysilane.

5. Composition selon l'une quelconque des revendications précédentes dans laquelle pour le composant (E) l'organosilane est sélectionné parmi le γ-amine propyl-triméthoxy silane, le γ-aminopropyltriéthoxysilane, le N-β-(aminoéthyl)-γ-aminopropyl, triméthoxy silane et le N-benzyl-γ-aminopropyltriméthoxysilane.

6. Composition selon l'une quelconque des revendications précédentes dans laquelle le composant (F) est sélectionné parmi le dibutylétain diacétate, le dibutylétain dioctoate, le dibutylétain dilaurate, le dibutylétain dioléate, le dibutylétain distéarate, le tributylétain acétate, le tributylétain octoate, le tributylétain laurate, le dioctylétain diacétate, le dioctylétain dilaurate, le diéthylétain dioléate, le monométhylétain dioléate, le zinc octanoate, le fer octanoate, et l'étain octanoate.

7. Composition selon l'une quelconque des revendications précédentes dans laquelle la poudre fine (G) est sélectionnée parmi du polycarbonate, du nylon, du polyéthylène, du polytétrafluoroéthylène, du polyméthylsilsesquioxane et du polyacétal.

8. Composition selon l'une quelconque des revendications précédentes dans laquelle la poudre fine (G) a une taille moyenne des particules dans l'intervalle de 1 à 30 μm.

9. Mélange des composants (A), (B), (C), (D) et (G) tel que défini dans l'une quelconque des revendications 1 à 4, 7 et 8 ci-dessus, pour utilisation par mélange avec les composants supplémentaires (E) et (F).

10. Méthode de préparation d'une composition selon quelconque des revendications 1 à 9, comprenant le mélange des composants mentionnés ci dessus ensemble.

11. Méthode de revêtement d'un article en caoutchouc comprenant l'application d'une composition telle que définie dans l'une quelconque des revendications 1 à 8 sur l'article et la polymérisation de la composition.

12. Article en caoutchouc ayant un revêtement fait par polymérisation d'une couche d'une composition telle que définie dans l'une quelconque des revendications 1 à 8.